(19) Europäisches Patentamt
European Patent Office
Office européen des brevets

(11) **EP 4 685 626 A1**

(12) **EUROPEAN PATENT APPLICATION**

(43) Date of publication:
**28.01.2026 Bulletin 2026/05**

(21) Application number: **25191236.6**

(22) Date of filing: **23.07.2025**

(51) International Patent Classification (IPC):
**G06F 3/12** (2006.01)

(52) Cooperative Patent Classification (CPC):
**G06F 3/1221; G06F 3/1201; G06F 3/1229;
G06F 3/1293;** G06F 3/1211; G06F 3/1296

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **26.07.2024 JP 2024121393**

(71) Applicant: **CANON KABUSHIKI KAISHA
Tokyo 146-8501 (JP)**

(72) Inventor: **HIKICHI, Atsushi
Tokyo (JP)**

(74) Representative: **WESER & Kollegen
Patentanwälte PartmbB
Radeckestraße 43
81245 München (DE)**

(54) **IMAGE FORMING APPARATUS, CONTROL METHOD OF IMAGE FORMING APPARATUS, PROGRAM, AND STORAGE MEDIUM**

(57) In order to provide an action indicator for encouraging a user to use an image forming apparatus (101) in an environmentally friendly manner, the image forming apparatus (101) includes a printing unit (104) configured to perform printing on a print medium based on image data; and a controller (103) configured to control the printing unit (104) based on a job involving the printing. The controller (103) causes the printing unit (104) to print by applying printing settings to image data related to the job, and outputs information on an amount of power required to execute the job, the amount of power being an amount of power per processing unit on the condition that the print setting is applied.

FIG.4B

EP 4 685 626 A1

**Description**

TECHNICAL FIELD

Field of the Technology

The present disclosure relates to a method of presenting an environmentally friendly way to use an image forming apparatus.

BACKGROUND

In recent years, environmental issues have become global issues to be tackled, and all the countries and companies have been being required to take measures for the environmental issues. One of the measures for the environmental issues in image forming apparatuses is to reduce power consumption. For reducing power consumption, there are methods such as a power saving method through technological improvement and in addition a method of encouraging users to be environmentally conscious, thereby leading to a reduction in power consumption. In this regard, Japanese Patent Laid-Open No. 2013-182131 discloses a technique for measuring an amount of power consumption with a watt meter, dividing the amount of power consumption by each factor for consuming electric power, performing simulation based on the actually measured values to estimate how much the amount of power consumption could be reduced if what action were taken, and presenting the simulation result to a user.

SUMMARY

The present disclosure in its first aspect provides an image forming apparatus as specified in claims 1 to 21. The present disclosure in its second aspect provides a control method of an image forming apparatus as specified in claims 22 to 24. The present disclosure in its third aspect provides a program as specified in claim 25. The present disclosure in its fourth aspect provides a storage medium as specified in claim 26.

According to the present disclosure, it is possible to provide an action indicator for encouraging a user to use an image forming apparatus in an environmentally friendly manner.

Features of the present disclosure will become apparent from the following description of embodiments with reference to the attached drawings. The following description of embodiments are described by way of example.

BRIEF DESCRIPTION OF THE DRAWINGS

Fig. 1 is a block diagram illustrating an example of a configuration of an image forming system;

Fig. 2 is a block diagram illustrating an internal configuration of a controller;

Fig. 3 is a block diagram illustrating a power supply configuration of an image forming apparatus;

Fig. 4A is a diagram for explaining a configuration of an operation unit of the image forming apparatus and Fig. 4B is a diagram illustrating an example of a UI screen;

Fig. 5A is a graph presenting a power consumption for color printing on one sheet of plain paper in A4 size and Fig. 5B is a diagram for explaining power consumption percentages of units in the image forming apparatus;

Fig. 6 is a diagram for explaining how an amount of power for printing per one-page image changes depending on print settings;

Fig. 7 is a flowchart presenting a flow of processes for storing basic data for calculating an amount of power for printing per one-page image;

Fig. 8 is a flowchart presenting a flow of processes for calculating an amount of power for printing per one-page image;

Fig. 9 is a flowchart presenting a flow of processes for storing basic data for calculating a $CO_2$ emission associated with printing per one-page image; and

Fig. 10 is a flowchart presenting a flow of processes for calculating a $CO_2$ emission associated with printing per one-page image.

DESCRIPTION OF THE EMBODIMENTS

The aforementioned technique in Japanese Patent Laid-Open No. 2013-182131 is to calculate a reducible an amount of power consumption based on an amount of power consumption per page in a job process and a reduced number of pages with application of job process settings for achieving a reduction in the amount of power consumption, and

EP 4 685 626 A1

presenting the calculation result to the user. As a result, the user can know how much the amount of power consumption can be reduced in the case where, for example, combine printing (N-up printing) is performed. However, the information presented by the above technique is still insufficient as an action indicator for encouraging users to use image forming apparatuses in a highly efficient way from an environmentally friendly perspective, and there is room for improvement.

According to the present disclosure, it is possible to provide an action indicator for encouraging users to use image forming apparatuses in an environmentally friendly way.

Hereinafter, with reference to the attached drawings, the present disclosure is explained in detail in accordance with preferred embodiments. Configurations shown in the following embodiments are merely examples and the present disclosure is not limited to the configurations shown schematically.

[First Embodiment]

<System Configuration>

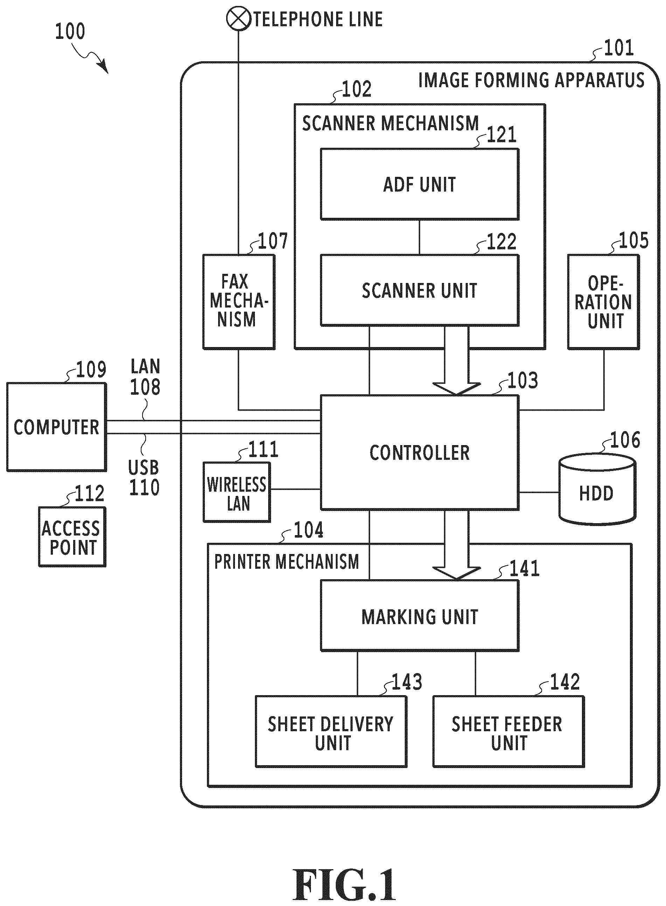

Fig. 1 is a block diagram illustrating an example of an image forming system according to the present embodiment. An information processing system 100 in the present embodiment includes an image forming apparatus 101, a computer (information processing apparatus) 109, and an access point 112.

The image forming apparatus 101 is a so-called multi-function machine having multiple functions such as a copy function, a print function, a data transmission function, and a data storage function. The image forming apparatus 101 is configured to be capable of receiving print instruction data (called "a print job") from the computer 109 via a LAN 108. Here, two or more computers 109 may be connected to the image forming apparatus 101. A scanner mechanism 102 optically reads a document and converts the read image of the document into a digital image. A printer mechanism 104 forms a digital image on a print medium such as a paper or plastic sheet (hereinafter referred to as "a sheet"). An operation unit 105 includes a touch panel and hardware keys for receiving various settings for the image forming apparatus 101 from a user and displaying a processing status. An HDD 106 is a large capacity non-volatile storage device that stores data of digital images, control programs, and so on. An SSD or eMMC may be used in place of the HDD 106. A FAX mechanism 107 transmits and receives data of digital images to and from a telephone line or the like. A controller 103 is connected to the scanner mechanism 102, the printer mechanism 104, the operation unit 105, the HDD 106, and the FAX mechanism 107, and executes jobs of the functions on the image forming apparatus 101 by issuing an instruction to each module. The image forming apparatus 101 is capable of inputting and outputting events and data from and to the computer 109 via the access point 112 and a wireless LAN 111, Moreover, the image forming apparatus 101 is capable of inputting and outputting events and data from and to the computer 109 via a USB 110.

The scanner mechanism 102 includes an ADF unit 121 capable of feeding originals one by one from a batch of originals placed therein, and a scanner unit 122 configured to optically read the documents and converts the images of documents into digital images. The data of the digital images obtained by the conversion is transmitted to the controller 103.

The printer mechanism 104 includes a sheet feeder unit 142 capable of feeding sheets one by one from a batch of sheets placed therein, a marking unit 141 for printing a digital image on a sheet, and a sheet delivery unit 143 for delivering the sheet after printing. In the present embodiment, the printing method is assumed to be an electrophotographic method, but any other printing method such as an inkjet method may also be used.

The configuration of the image forming system illustrated in Fig. 1 is just an example, and the system configuration is not limited to this. For example, the system may further include a finisher mechanism configured to perform processes, such as sorting, stapling, punching, and cutting, on sheets outputted from the sheet delivery unit 143 of the printer mechanism 104. The image forming apparatus 101 may also be a single function printer specialized only for the print function.

<Outline of Functions of Image Forming Apparatus>

The outline of the functions equipped in the image forming apparatus 101 in the present embodiment is as follows.

<<Copy Function>>

This is a function to obtain image data by reading a document with the scanner unit 122 and print the image data on a sheet with the printer mechanism 104.

<<Print Function>>

This is a function to print image data on a sheet with the printer mechanism 104, the image data being image data contained in a print job inputted from the computer 109, image data stored in advance in the HDD 106 (Box storage), or the like.

<<Data Transmission Function>>

This is a function to transmit image data, which is obtained by reading a document with the scanner mechanism 102, to an external apparatus such as the computer 109 via the LAN 108.

<<Data Storage (Box Storage) Function>>

This is a function to store image data, which is obtained by reading a document with the scanner mechanism 102, in the HDD 106, so that the stored image data can be read as needed and transmitted to an external apparatus or printed on a sheet with the printer mechanism 104.

<Internal Configuration of Controller>

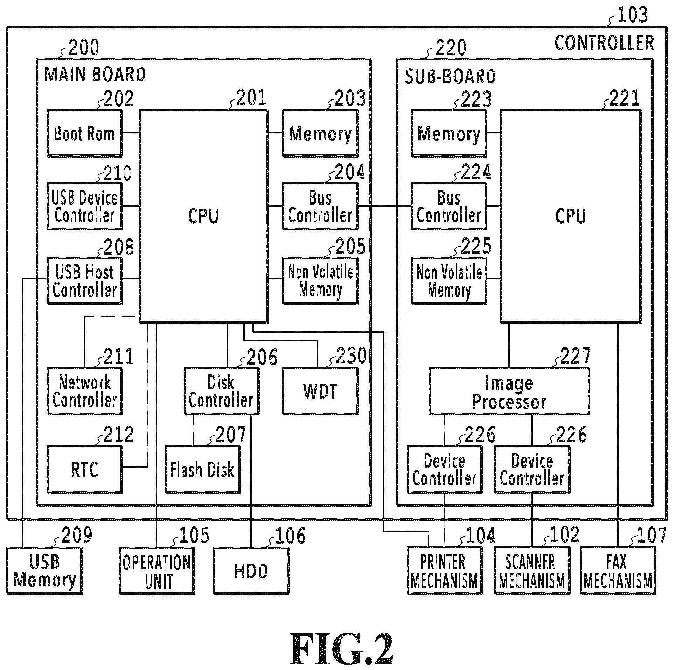

Next, an internal configuration of the controller 103 is described by using a block diagram illustrated in Fig. 2. The controller 103 includes a main board 200 and a sub-board 220. The main board 200 is a so-called general-purpose CPU system. The main board 200 includes a CPU 201 to control the image forming apparatus 101 overall, a boot ROM 202 to store a boot program, a memory 203 to be used as a work memory by the CPU 201, and a bus controller 204 having a bridge function with an external bus. The main board 200 also includes a non-volatile memory 205 to keep data from being erased even if the power is cut off, a disk controller 206 to control a storage device, a flash disk 207 such as an SSD or eMMC, and a USB host controller 208 to control the USB. The main board 200 further includes a USB device controller 210 to transmit and receive data or the like to and from the computer 109 via the USB 110, and a network controller 211 to transmit and receive data or the like to and from the computer 109 via the access point 112. This network controller 211 serves as the above wireless LAN 111 in Fig. 1. The CPU 201 controls a watchdog timer (WDT) 230 to reset the controller 103, and controls the network controller 211 for transmitting and receiving data to and from the computer 109 via the LAN 108. The CPU 201 also controls a RTC 212 for setting a current time or a return time. A USB memory 209, the operation unit 105, the HDD 106, and so on are connected to the main board 200.

The sub-board 220 includes a relatively-small general-purpose CPU system and image processing hardware. The sub-board 220 includes a CPU 221 to control the sub-board 220 overall, a memory 223 to be used as a work memory by the CPU 221, a bus controller 224 having a bridge function with an external bus, a non-volatile memory 225, an image processor 227, and device controllers 226. The printer mechanism 104 receives the data of digital images from the scanner mechanism 102 via the device controllers 226. The sheet on which a print process is performed by the printer mechanism 104 is outputted to a sheet receiving tray (not illustrated). The CPU 221 controls the FAX mechanism 107. Here, Fig. 2 is the block diagram illustrating main constituent elements of the controller and some constituent elements are simplified. For example, the CPU 201, the CPU 221, and so on each include peripheral hardware of the CPU such as a chip set, a bus bridge, and a clock generator, which are omitted. The configuration of the controller 103 illustrated in Fig. 2 is just an example, and the configuration is not limited to the above configuration.

<Operations of Controller>

Next, operations of the controller 103 are described by using, as an example, a case of executing the copy function. In response to a user's copy instruction from the operation unit 105, the CPU 201 transmits a command to read a document to the scanner mechanism 102 via the CPU 221. The scanner mechanism 102 optically reads the document, generates image data in a digital format in which each pixel has a RGB color value, and inputs the image data to the image processor 227 via the device controller 226. The image processor 227 performs direct memory access (DMA) transfer of the image data to the memory 223 via the CPU 221, thereby temporarily storing the image data in the memory 223. Next, upon confirmation that a certain amount or all of the image data is stored in the memory 223, the CPU 201 issues an instruction to output the image data to the printer mechanism 104 via the CPU 221. The CPU 221, which receives the output instruction from the CPU 201, notifies the image processor 227 of a storage location address of the image data in the memory 223. The image data in the memory 223 is transmitted to the printer mechanism 104 via the image processor 227 and the device controller 226 in accordance with a synchronization signal from the printer mechanism 104. Then, the printer mechanism 104 prints the image data on a sheet. In a case where multiple copies are to be printed, the CPU 201 stores, in the HDD 106, the image data in the memory 223. For printing the second and following copies, the image data does not have to be received from the scanner mechanism 102, but can be transmitted from the HDD 106 or the memory 223 to the printer mechanism 104.

<Power Supply Configuration of Image Forming Apparatus>

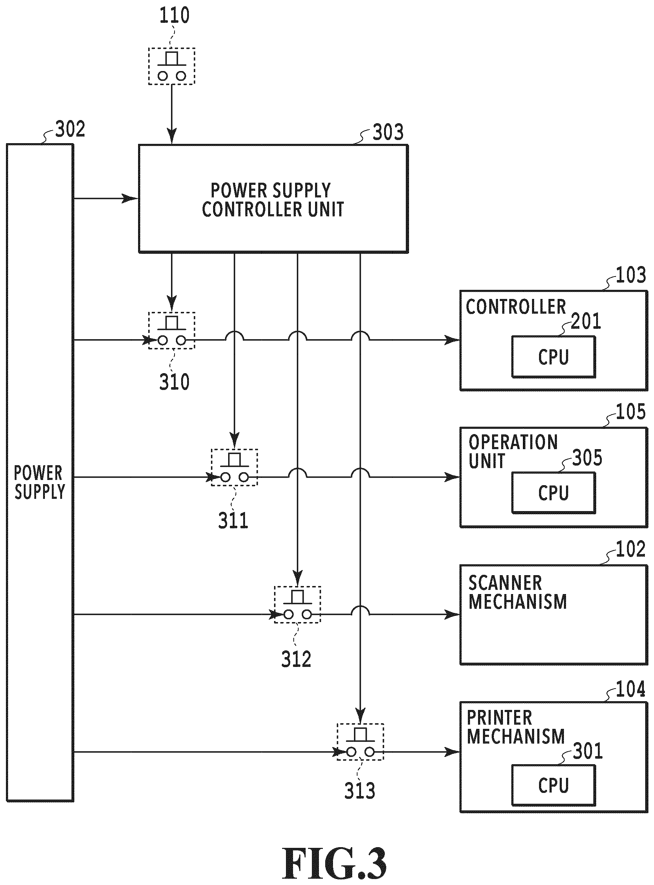

Fig. 3 is a block diagram illustrating a power supply configuration of the image forming apparatus 101. Hereinafter, a configuration of a power supply and peripherals according to the present embodiment is described with reference to Fig. 3. In Fig. 3, a power supply control unit 303 is constantly supplied with power from a power supply 302 via a power supply line. However, this power consumption is very small and only the power supply control unit 303 is supplied with power and performs power control under the condition that the image forming apparatus 101 is powered off. In the image forming apparatus 101, in a case where a power switch 110 is pushed, the power supply control unit 303 detects this and controls a power switch 310 to supply power to the CPU 201 of the controller 103. Similarly, the power supply control unit 303 controls a power switch 311 to supply power to a CPU 305 of the operation unit 105, controls a power switch 312 to supply power to the scanner mechanism 102, and controls a power switch 313 to supply power to the printer mechanism 104. In addition, the CPU 201 of the controller 103 may request the power supply control unit 303, thereby controlling the power switch 311 to individually supply power to the CPU 305 of the operation unit 105. At the same time, the power switch 312 and the power switch 313 may be individually controlled so that the power supply 302 can individually supply power to the scanner mechanism 102 and the printer mechanism 104. The power supply on a per-block basis as illustrated in Fig. 3 can be realized, for example, by a configuration in which the power switch 310 includes two relay switches, and, in a sleep status, one of the relay switches connected to a block to be powered off is turned off and the other relay switch is kept on, or a similar configuration. In a shutdown status, both the relay switches are turned off. In this case, a power supply control signal is not a binary signal but a multi-value control signal depending on a power supply status. In the present embodiment, the power supply in each of power statuses including the sleep status, the shutdown status, and so on is achieved under the above control, although the detailed description is omitted herein. The power supply by the power supply control unit 303 is explained below for each pattern.

<<Power Supply for Reboot>>

In a standby status (ready status) after startup, the CPU 201 of the controller 103 receives a reboot event. The CPU 201 receives a reboot event issued by an application running on the CPU 201 or a reboot event issued from the computer 109 via the LAN 108. First, the CPU 201 performs an application shutdown process, and a process of storing information in the memory 203 into the HDD 106. The CPU 201 also performs a peripherals shutdown process and shutdown processes on the printer mechanism 104, the scanner mechanism 102, the FAX mechanism 107, and so on. The CPU 201 notifies the power supply control unit 303 and transitions to a power-off status. In the power-off status, the power supply control unit 303 turns the power switches 310 to 313 off. As a result, the power supply control unit 303 cuts off the power supply to the controller 103, the printer mechanism 104, the scanner mechanism 102, the FAX mechanism 107, and so on. The power supply control unit 303 waits until an analog signal of the power supply 302 becomes dull and drops completely. Subsequently, the power supply control unit 303 turns the power switches 310 to 313 on and supplies power to the controller 103, the operation unit 105, the scanner mechanism 102, the printer mechanism 104, and so on. The CPU 201 of the controller 103 performs a booting process, initialization processes on the peripherals, and startup processes on the printer mechanism 104, the scanner mechanism 102, and the FAX mechanism 107.

<<Power Supply in Transition to Sleep Status>>

In an active status, the CPU 201 transitions to the sleep status at timing such as when a predetermined period of time passes while a user does not use the image forming apparatus, when the user depresses a touch panel or a power saving key on the operation unit 105, or when a preset time point arrives. The sleep status is a status which requires only a shorter startup time than in normal startup while saving the power consumption. The CPU 201 notifies the power supply control unit 303 of the transition to the sleep status, and changes the power supply to the controller 103. The power supply on a per-block basis can be realized by a configuration in which two relay switches 310 are provided, and, in the sleep status, only one of the relay switches connected to a block to be powered off is turned off and the other relay switch connected to a block to be powered off is kept on, or a similar configuration. In the same manner, the scanner mechanism 102 and the printer mechanism 104 can transition to the sleep status.

<<Power Supply in Sleep Status>>

In the sleep status, the power is supplied to the memory 203, an interrupt controller, the network controller, the RTC, the USB controller, and so on in the controller 103. In addition, the power is supplied to the power saving key of the operation unit 105, part of the FAX mechanism 107, various sensors, and so on.

<<Power Supply in Return from Sleep Status>>

In response to reception of an interrupt in the sleep status, the power supply control unit 303 starts supplying power. Examples of a cause for the interrupt include opening or closing of a cover of the printer mechanism 104, insertion or removal of a sheet in a manual sheet feeder unit, opening or closing of a pressure plate of the scanner mechanism 102, document detection by the ADF, detection by an NFC reader, detection by a human sensor, off-hook of a FAX handset, incoming facsimile, and so on. The power supply control unit 303 notifies the CPU 201 of the cause for the interrupt. In response to the notification, the CPU 201 performs a sleep return process to return the status of the software to the normal status. Specifically, in a case where the power supply control unit 303 receives an event handler of pressing the power-saving key, which is one of the sleep return factors, during the sleep, the power supply control unit 303 turns on the power switch 310 and returns the CPU 201 of the controller 103 from the sleep. In this process, for example, the power supply control unit 303 controls the power switch 310 with multiple values, and supplies power to the blocks in the controller 103. The CPU 201 notifies the power supply control unit 303 and the power supply control unit 303 turns the power switches 311 to 313 on to supply power to the operation unit 105, the scanner mechanism 102, and the printer mechanism 104. In response to reception of a network packet, the image forming apparatus may be returned from the sleep status and process the network packet while in an intermediate sleep status. In a case where a network packet is received in the sleep status, the power supply control unit 303 turns the power switch 310 on and returns the CPU 201 of the controller 103 from the sleep status. In a case where the network packet received at this time contains a print job, the CPU 201 issues a notification to the power supply control unit 303. The power supply control unit 303 receiving that notification turns the power switch 313 on to supply power to the printer mechanism 104. In this case, it is possible to process the print job without supplying power to the operation unit 105 and the scanner mechanism 102. In other words, in a case where the user does not use the touch panel or the like, there is no need to supply power to the operation unit 105. In addition, there is also no need to supply power to the printer mechanism 104 and the scanner mechanism 102 in a case where any job is not generated or the device information does not have to be obtained.

<<Power Supply in Entering Sleep Status Again>>

The CPU 201 transitions to the sleep status again after the end of execution of copying based on a user's instruction via the operation unit 105 or printing based on a print instruction via the network. Specifically, the CPU 201 notifies the power supply control unit 303 of the transition to the sleep status. The power supply control unit 303 turns the power switches 311 to 313 off to stop the power supply to the blocks other than the controller 103.

<<Power Supply in Fast Startup Mode>>

In a case where the power switch 110 is turned off, the power supply control unit 303 notifies the CPU 201. The power supply control unit 303 controls the power switch 310 in accordance with an instruction from the CPU 201, powers off the CPU 221 and the memory 223, and turns the memory 203 into a self-refresh status in which power consumption is saved with the refresh rate lowered. Thus, the controller 103 is turned into a suspend status (a power saving status in which the memory is supplied with power to maintain the state). After that, in a case where the power switch 110 is turned on, the power supply control unit 303 releases the memory 203 from the self-refresh status, and powers on the CPU 221 and the memory 223 to start them up, thereby returning the controller 103 from the suspend status.

<Configuration of Operation Unit>

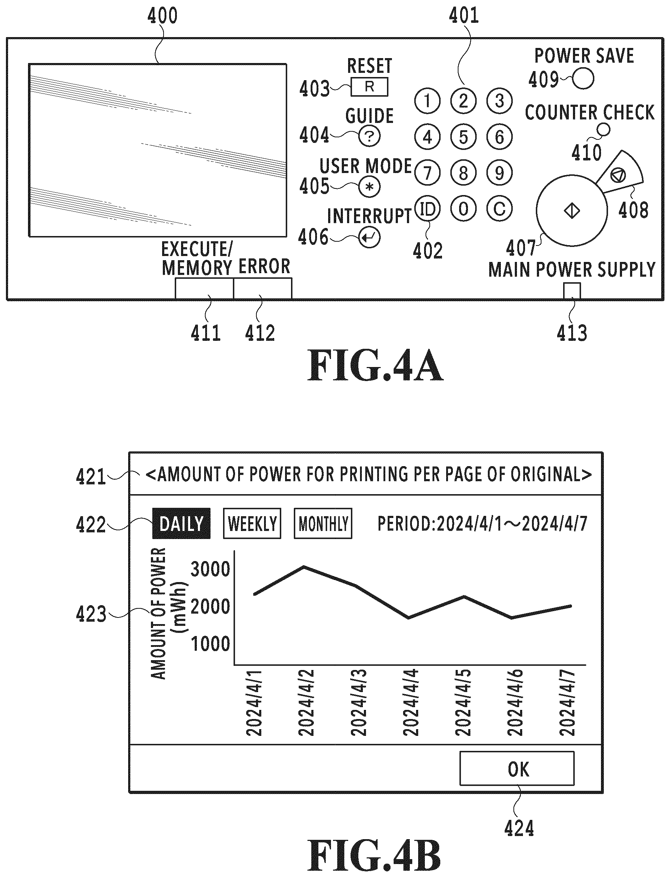

Fig. 4A is a plan view for explaining a configuration of the operation unit 105 of the image forming apparatus 101. The operation unit 105 includes a touch panel 400, various keys 401 to 410, and various LEDs 411 to 413. The touch panel 400 is a display device such as an LCD integrated with an input device, which displays various user interface screens (UI screens) for a selection of a function to be used, print settings for printing, and so on. A user can perform various operations by directly touching the surface of each UI screen. Ten keys 401 are keys for inputting numeric values of 0 to 9, an ID key 402 is a key for inputting a division number or the like in a case where the apparatus is managed on a division basis, a reset key 403 is a key for resetting the set mode. A guide key 404 is a key for displaying an explanation screen about each mode, a user mode key 405 is a key for entering a user mode screen on which various settings on the apparatus can be made, and an interrupt key 406 is a key for performing an interrupt copy. A start key 407 is a key for stating a copy or scan operation, and a stop key 409 is a key for canceling a job under execution. A power saving key 409 is a key for entering a power saving status. In a case where the power saving key 409 already pressed once is pressed again, the image forming apparatus 101 is returned from the power saving status. A counter check key 410 is a key for displaying, on the touch panel 400, a counted result of the number of sheets outputted by copying or PDL printing. A status LED 411 is an LED indicating that a job execution or an image accumulation in an image memory is in progress. An error LED 412 is an LED indicating that an error state occurs such as a paper jam or a door open state. A main power supply LED 413 is an LED indicating that a main switch is ON. The various keys 401 to 410 may also be software keys formed on the touch panel 400 instead of the hardware keys.

The CPU 201 of the controller 103 displays, on the touch panel 400 of the operation unit 105, one of the various UI screens based on a user's instruction or the like, depending on an apparatus status. Fig. 4B is an example of a UI screen according to the present embodiment, on which "Amount of Power for Printing Per Page of Document" is presented to a user with the aim of raising environmental consciousness. The UI screen in Fig. 4B includes a label field 421, display basis switching buttons 422, a graph field 423, and an OK button 424. The label field 421 is a field on which a text specifying what is presented on the UI screen is written and "Amount of Power for Printing Per Page of Document" is written. The display basis switching buttons 422 are buttons that enable the user to select a display basis in the horizontal axis of the graph (time axis) from a dairy-based period, a weekly-based period, and a monthly-based period, thereby switching to the selected display basis. The current selection of "Daily", which indicates the daily-based period, is expressed with white text in black background. The graph field 423 is a field for displaying a graph, which currently displays a graph with the vertical axis representing the amount of power and the horizontal axis representing one week period on a daily basis. In a case where the user selects "Weekly", for example, a graph is displayed with the horizontal axis representing a three month period on a weekly basis. In a case where the user selects "Monthly", for example, a graph is displayed with the horizontal axis representing a one year period on a monthly basis. The above display bases are just an example, and the display basis may be, for example, a 48 hour period on an hourly basis or a three year period on an annual basis. The OK button 424 is a button to be pressed after a UI screen for checking the power consumption is checked. In the case where the OK button 424 is pressed, the screen is switched to a UI screen immediately previously displayed.

<"Amount of Power for Printing Per Page of Document">

Hereinafter, "Amount of Power for Printing Per Page of Document" written in the label field 421 is explained. First, "Printing" includes both cases of printing for a copy job and printing for a print job. Then, "per page of document", which is an important concept in the present disclosure, means "per one scanned image", where the one scanned image is obtained by scanning one page of a document in copying or "per one page image", where the one scanned image is obtained by interpreting one page of PDL data for PDL printing. What both cases mean in common is "one image (per image)", which is the unit of page layout in combine printing. The combine printing is also called N-Up printing (N in 1 printing), where "N" represents the number of pages to be printed on one side of a sheet). In other words, "per page of document" is synonymous with per "one-page image", which is the unit of page layout. Accordingly, the above "Amount of Power for Printing Per Page of Document" can be rephrased as "amount of power for printing per one-page image". For example, in a case where a normal printing (single-sided printing and non-combine printing) method is designated in the print settings applied to execution of printing, one "scanned image/page image" is laid out and printed per sheet. Instead, in a case where combine printing (N-Up printing) is designated, multiple "scanned images/page images" are laid out and printed per sheet. In other words, in the case of the combine printing, multiple "scanned images/page images" described above are composited in each output page. For this reason, "per page of document (per one-page image)" is a concept that is similar to but different from "per output page (per output sheet)". According to the present disclosure, "Amount of power for printing per one-page image" is calculated in accordance with the following formula (1).

$$\text{Amount of power for printing per one-page image} =$$

$$(\text{Amount of power for reading} + \text{Amount of power for printing} + \text{Amount of power for}$$

$$\text{controller}) \div \text{Number of one-page images} \ldots \text{Formula (1)}$$

In the above formula (1), "Number of one-page images" indicates a total number of the aforementioned one-page images printed for copy jobs and print jobs that were executed for a certain past period. Then, "Amount of power for reading", "Amount of power for printing", and "Amount of power for controller" are defined as follows.

- Amount of power for reading: copy count $\times$ read power constant (*only for copy jobs)
- Amount of power for printing: cumulative amount of power of printer (a fixing process + processes other than the fixing process)
- Amount of power for controller: job execution time $\times$ controller power constant

In this case, "copy count" denotes the number of scans executed in preparation for subsequent printing. For example, in a case where image data obtained by scanning a document is transmitted to an external apparatus, this scan is not counted in the copy count because the image data is not printed after the scan. In the case of a print job for PDL printing or the like, the copy count is not counted up because the scan is not performed prior to the printing. The read power constant is an amount of power required for one scan and is a value of, for example, 65 (mRh) in a case of scanning a sheet of plain paper in A4 size. The controller power constant is a value of, for example, 18W, although it varies depending on the specifications of the controller 103. Assuming that a time for one copy is 10 seconds, the amount of power for controller is calculated as 180 (Ws)×1000 (mW) ÷ 60 (sec) ÷ 60 (min) = 50 (mWh).

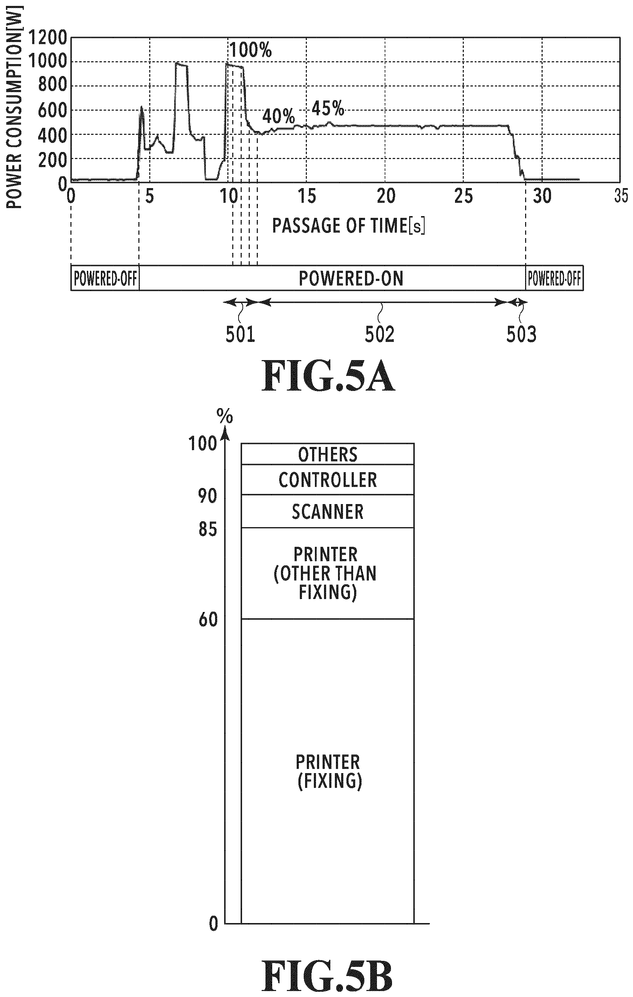

Next, with reference to the drawings, description is given of a specific example of the amount of power for printing per one-page image obtained by using the above formula (1). Fig. 5A is a graph presenting an amount of power for color printing on one sheet of plain paper in A4 size, in which the vertical axis represents the power consumption and the horizontal axis represents a time passage. In the graph of Fig. 5A, a bidirectional arrow 501 indicates that a time required to perform pre-processing (such as chip initialization/temperature adjustment/patch inspection/color tone correction) is about 2 seconds and the power consumption during this time is kept at about 1000 (W). A bidirectional arrow 502 indicates that a time required to convey a sheet and form an image is about 16 seconds, and the power consumption during this time is kept at about 450 (W). A bidirectional arrow 503 indicates that a time required to perform postprocessing (such as cool down) is about 1 second and the power consumption during this time falls down to about 0 (W). In this case, the amount of power consumption required for color printing on a sheet of plain paper in the A4 size is about 1000 (W) × 2 (sec) + 450 (W) × 16 (sec) = 9200 (Ws). This value is converted to a value for 1 hour (Wh), thereby obtaining 9200 (Ws) × 1000 (mW) ÷ 60 (sec) ÷ 60 (min) = 2556 (mWh). Fig. 5B is a diagram for explaining power consumption percentages of the units in the image forming apparatus 101. From Fig. 5B, it can be seen that the power consumption of the printer mechanism 104 accounts for approximately 85% of the total power consumption, and that more power is consumed in the execution of a job involving printing, such as a copy job or a print job.

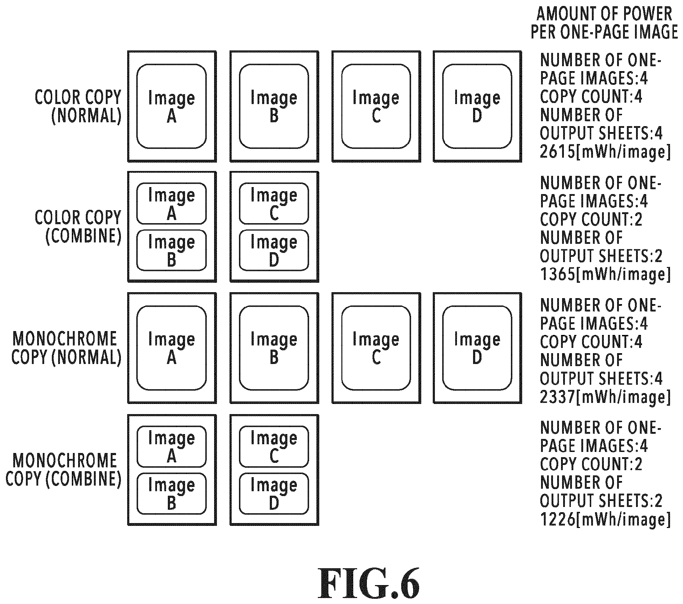

Fig. 6 is a diagram for explaining how the amount of power for printing per one-page image for copying four originals on sheets in A4 size varies depending on print settings. In the specific example illustrated in Fig. 5A described above, a process of calculating the amount of power for printing per one-page image under each set of print settings is described. In this process, with the time indicated by the bidirectional arrow 503 in Fig. 5A taken into consideration, the amount of power consumption for color printing on one sheet of plain paper in A4 size is assumed to be 9000 (Ws). Then, the calculation is performed on the assumption that, of 9000 (Ws), "the fixing process" accounts for 6000 (Ws) and "the processes other than the fixing process" account for 3000 (Ws) based on Fig. 5B described above. In addition, "the fixing process" for monochrome printing is assumed to consume 5000 (Ws), which is 15% lower than the amount of power consumption for color printing.

<<Case of Color Copy (Normal)>>

The amount of power for printing per one-page image under the print settings of color and non-combining is calculated in accordance with the above Formula (1) as follows.

First, the amount of power consumption required to make a color copy of one document is obtained. From the specific example given above, the amount of power consumption of the fixing process is 6000 (Ws) × 1000 (mW) ÷ 60 (sec) ÷ 60 (min) = 1667 (mWh). The amount of power consumption of the processes other than the fixing process is 3000 (Ws) × 1000 (mW) ÷ 60 (sec) ÷ 60 (min) = 833 (mWh). Thus, the amount of power for printing is 1667 (mWh) + 833 (mWh) = 2500 (mWh). Since the read power constant is 65 (mwh) and the amount of power for controller to make one copy is 50 (mWh), the amount of power consumption required to make a color copy of one document is (65 (mWh) + 2500 (mWh) + 50 (mWh) = 2615 (mWh).

As a result of the above, the amount of power for printing per page of document (= per one-page image) to make color copies of four originals by non-combine printing is {2615 (mWh) × 4 (sheets)} ÷ 4 (the number of images) = 2615 (mWh). However, the actual amount of power is a value smaller than 2615 (mWh) because the temperature adjustment time does not simply become four times longer.

<<Case of Color Copy (Combine)>>

In the case where combine printing (2 in 1) is set in the print settings, the power of the printer is half of the above power consumption by the non-combine printing. That is, the amount of power for printing per one-page image in this case is calculated in accordance with {the amount of power consumption of the fixing process + the amount of power consumption of the processes other than the fixing process} × 2 + {read power constant + controller power constant} × 4 ÷ 4. The above values are assigned to this formula. Then {(1667 (mWh) + 833 (mWh)) × 2 + (65 (mwh) + 50 (mWh)) × 4} ÷ 4 = 1365 (mWh) is obtained, which is the amount of power for printing per page of document (= per one-page image) to make color copies of four originals by combine printing (2 in 1).

<<Case of Monochrome Copy (Normal)>>

The amount of power for printing per one-page image under the print settings of monochrome and non-combining is calculated in accordance with the above Formula (1) as follows.

First, the amount of power consumption required to make a monochrome copy of one document is obtained. From the specific example given above, the amount of power of the fixing process is 5000 (Ws) $\times$ 1000 (mW) $\div$ 60 (sec) $\div$ 60 (min) = 1389 (mWh). The amount of power of the processes other than the fixing process is 3000 (Ws) $\times$ 1000 (mW) $\div$ 60 (sec) $\div$ 60 (min) = 833 (mWh). Thus, the amount of power for printing is 1389 (mWh) + 833 (mWh) = 2222 (mWh). Since the read power constant is 65 (mwh) and the amount of power for controller to make one copy is 50 (mWh), the amount of power consumption required to make a monochrome copy of one document is (65 (mWh) + 2222 (mWh) + 50 (mWh) = 2337 (mWh).

As a result of the above, the amount of power for printing per page of document (= per one-page image) to make monochrome copies of four originals by non-combine printing is {2337 (mWh) $\times$ 4 (sheets)} $\div$ 4 (the number of images) = 2337 (mWh). However, the actual amount of power is a value smaller than 2337 (mWh) because the temperature adjustment time does not simply become four times longer.

<<Case of Monochrome Copy (Combine)>>

In the case where monochrome combine printing (2 in 1) is set in the print settings, the amount of power consumption of the printer is half of the above power consumption by the non-combine printing. That is, the amount of power consumption for printing per one-page image in this case is calculated in accordance with {the amount of power consumption of the fixing process + the amount of power consumption of the processes other than the fixing process} $\times$ 2 + {read power constant + controller power constant} $\times$ 4 $\div$ 4. The above values are assigned to this formula. Then, {(1389 (mWh) + 833 (mWh)) $\times$ 2 + (65 (mwh) + 50 (mWh)) $\times$ 4} $\div$ 4 = 1226 (mWh) is obtained, which is the amount of power for printing per page of document (= per one-page image) to make monochrome copies of four originals by combine printing (2 in 1).

As can be seen from the above, as compared with the color printing, the monochrome printing can reduce the power consumption by about 10% and the combine printing can also reduce the power consumption by about 50%.

<Operation Flow of Image Forming Apparatus>

<<Storage of Basic Data for Amount of Power Consumption Calculation>>

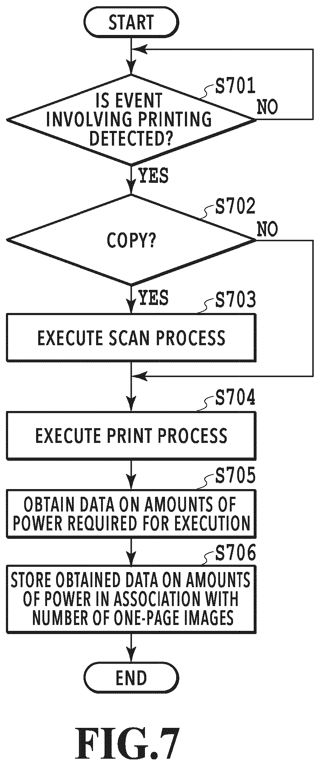

Next, with reference to a flowchart in Fig. 7, description is given of a series of processes for storing basic data for calculating the above amount of power for printing per one-page image. The series of processes presented in the flowchart in Fig. 7 is performed by the CPU 201 of the controller 103 executing a predetermined program. In the following description, sign "S" means a step.

S701 is a step of monitoring whether or not an event involving printing occurs. If such an event is detected, S702 is executed next. Examples of an event involving printing include a depression of the "copy" button or the "Box Print" button via the operation unit 105, a reception of a copy instruction from the computer 109 via a remote UI, a reception of a print job via a printer driver, and so on. In the case where a depression of the "copy" button via the operation unit 105 or a reception of a copy instruction via the remote UI is detected, the controller 103 generates a relevant copy job or print job. In the case where a depression of the "Box Print" button via the operation unit 105 is detected, a print job that was generated in the course of storing target data is read.

In S702, which process to execute next is determined based on whether the job relevant to the detected event is a copy job that requires a scan process or a print job that does not require the scan process. In the case of a copy job, S703 is executed next. In the case of a print job, S704 is executed next.

In S703, according to an instruction from the controller 103, the ADF unit 121 sequentially takes in originals placed therein and the scanner unit 122 sequentially performs a scan process on the taken-in originals. The scanned image data obtained by this scan process is transmitted to the controller 103.

In S704, according to an instruction from the controller 103, the sheet feeder unit 142 feeds predetermined sheets to the marking unit 141, the marking unit 141 performs a print process based on image data for printing, and the sheet delivery unit 143 outputs the printed sheets. The controller 103 applies the print settings designated by the user (color/monochrome, combine printing, and so on) to the image data for the process target job, converts the result image data into a format processable by the marking unit 141, and provides the resultant data as the image data for printing to the marking unit 141.

In S705, the controller 103 obtains data on the amounts of power required to execute S702 to S704 as basic data to be used in an amount of power calculation process to be described below. Specifically, the CPU 201 requests the CPU 221 or a CPU 301 of the printer mechanism 104 to provide the cumulative amount of power required for the print process in S704 (the sum value of "the amount of power of the fixing process + the amount of power of the processes other than the fixing process"), and obtains it as the above "amount of power for printing". In addition, the CPU 201 obtains the above "amount of power for controller" by multiplying the time required to execute S702 to S704 by the above controller power constant. In the case where the scan process in S703 is executed (in other words, copying is executed), the CPU 201 obtains the above "amount of power for reading" by multiplying the copy count value, that is, the number of scans executed, by the above read power constant. The job execution time, the copy count value, the controller power constant, the read power constant, and other data required for the calculation may be read from the memory 203 or the HDD 106 and used as needed. In a case where the scanner mechanism 102, the controller 103, and the printer mechanism 104 are equipped with power consumption measuring units and accurate amounts of power consumptions can be obtained, the values actually measured by the measuring units may be obtained instead of the values calculated by the above calculation.

In S706, the controller 103 stores the data on the amounts of power obtained in S705 in the HDD 106 while associating the data with the number of one-page images and the copy count value (in the case of the copy job) in the executed jog. After the storage, the present flow is ended.

The above is the flow of processes for storing the basic data for calculating the power for printing per one-page image. The power for printing per one-page image is calculated by using the basic data for a certain past period thus stored.

<<Calculation of Amount of Power for Printing per One-Page Image>>

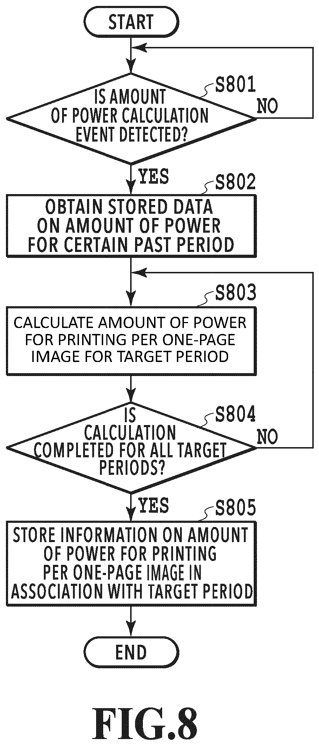

Next, with reference to a flowchart in Fig. 8, description is given of a series of processes for calculating the amount of power for printing per one-page image by using the basic data stored as described above. The series of processes presented in the flowchart in Fig. 8 is performed by the CPU 201 of the controller 103 executing a predetermined program. In the following description, sign "S" means a step.

S801 is a process of monitoring whether an amount of power consumption calculation event occurs. If such an event is detected, S802 is executed next. The amount of power consumption calculation event mentioned herein is, for example, a detection of a signal indicating that the image forming apparatus 101 will enter the sleep statue/off status. Specifically, the event is a transition of the image forming apparatus 101 to the sleep status in the case where the unused state continues for a predetermined time, a shutdown instruction (a depression of the power supply button) via the operation unit 105, or the like.

In S802, the controller 103 reads and obtains from the HDD 106 the basic data for a certain past period that was stored according to the flow in Fig. 7 described above, that is, the data on the amounts of power associated with the numbers of one-page images. Here, the basic data for the past one year is obtained on the premise that the graphs will be displayed for the past one week on the "daily" basis, the past three months on the "weekly" basis, and the past one year on the "monthly" basis as presented above in Fig. 4B.

In S803, the controller 103 calculates the amount of power for printing per one-page image by using the basic data for a calculation target period extracted from the basic data obtained in S802. In the present embodiment, the target period is set to each of the past one week on the "daily" basis, the past three months on the "weekly" basis, and the past one year on the "monthly" basis, and the amount of power for printing per one-page image is calculated by using the basic data for each of the above target periods. The specific calculation method is as described in detail above.

In S804, the controller 103 determines whether or not the calculation of the amount of power for printing per one-page image is completed for all the target periods. If there is a target period yet to be processed, the controller 103 returns to S803 and continues the process. On the other hand, if the calculation of the amount of power for printing per one-page image is completed for all of the past one week on the "daily" basis, the past three months on the "weekly" basis, and the past one year on the "monthly" basis set as the target periods, S805 is executed next.

In S805, the controller 103 stores, into the memory 203 or the HDD 106, the information on the amount of power for printing per one-page image calculated for each of the target periods in S804 while associating the information with the relevant target period. After the information is stored, the process specified in the event detected in S801 is performed and the present flow is ended. For example, a sleep transition process is executed in the case where the event detected in S801 is a transition to the sleep status, or a power-off process is executed in the case where the event is a shutdown instruction.

The above describes the details of the processes for calculating and storing the amount of power for printing per one-page image according to the present embodiment. After that, for example, in response to a depression of a "graph display" button (not illustrated) via the touch panel 400 or the like, a UI screen like Fig. 4B for a target period selected by the user is generated based on the stored information on the amount of power consumption for each target period and is displayed.

<Modification Example 1>

In the foregoing embodiment, the amount of power for printing per one-page image is calculated and stored at timing of a transition to the sleep status or the like. However, the present disclosure is not limited to this. For example, the amount of power for printing per one-page image may be calculated based on an explicit instruction by the user such as a user's depression of the "graph display" button via the touch panel 400 immediately after execution of copying or PDL printing. In this case, a UI screen like Fig. 4B for a target period selected by the user is generated based on the information on the calculated amount of power consumption for each target period and is displayed on the touch panel 400.

<Modification Example 2>

In the foregoing embodiment, the information on the calculated amount of power for printing per one-page image is stored in the image forming apparatus 101 and is displayed on the operation unit 105 of the image forming apparatus 101 in response to a user's request. However, the present disclosure is not limited to this. For example, the aforementioned UI screen in Fig. 4B may be displayed in response to an operation on the remote UI or displayed on a server apparatus (not illustrated). The remote UI mentioned herein is software enabling a user to access the image forming apparatus 101 from a web browser of the computer 109 or the like via the network, and to check the status of the image forming apparatus 101, operate a job, make various settings, and so on. In the case where the amount of power for printing per one-page image is displayed on the remote UI or the server apparatus, the calculation result is transmitted to the external apparatus, for example, after the calculation result is stored in S805 in Fig. 8 as described above. The external apparatus receiving the calculation result may store the calculation result into an internal storage or the like, and may generate and display a UI screen in response to a user's request. The calculation result may be transmitted to the external apparatus in a push-type transmission manner in which the calculation result is transmitted every time that the calculation result is updated through execution of a new calculation process, or in a pull-type transmission manner in which the calculation result is transmitted in response to a request from the external apparatus.

[Second Embodiment]

Embodiment 1 is the mode of encouraging users to be environmentally conscious by presenting the amount of power for printing per page of document (per one-page image). Next, a mode of encouraging users to be environmentally conscious by presenting an amount of $CO_2$ emission associated with printing per page of document to users is described as Embodiment 2. In Embodiment 2, $CO_2$ (carbon dioxide) is used as an example of greenhouse gases, but another gas may also be used. The system configuration and the hardware configuration of an image forming apparatus are basically the same as in Embodiment 1, and the following description is given mainly about differences from Embodiment 1.

<"Amount of $CO_2$ Emission Associated with Printing Per Page of Document">

Hereinafter, an "Amount of $CO_2$ emission associated with printing per page of document" is described. First, the meaning of "printing" in this case is the same as in Embodiment 1, and includes both cases of printing for a copy job and printing for a print job. **In** addition, the meaning of "per page of document" is also the same as in Embodiment 1, and is synonymous with per one-page image, which is the unit of page layout. The "Amount of $CO_2$ emission associated with printing per page of document" according to the present disclosure is obtained in accordance with the following formula (2).

Amount of $CO_2$ emission (g) associated with printing per page of document =
Amount of $CO_2$ emission (g) associated with an amount of power for printing per one-page image*1
+ Amount of $CO_2$ emission (g) of consumable parts per one-page image*2
+ Amount of $CO_2$ emission (g) of color materials per one-page image*3 ... Formula (2)

As presented in the above formula (2), the "Amount of $CO_2$ emission associated with printing per page of document" includes three items *1 to *3. How to obtain each item is described below.

<<How to Obtain Amount of $CO_2$ Emission*1>>

First, the method of obtaining the "amount of power consumption for printing per one-page image (mWh)" is as described in Embodiment 1. The amount of $CO_2$ emission (g) associated with printing per page of document is obtained by multiplying the above amount of power by a $CO_2$ emission coefficient (g-$CO_2$/Wh). Here, the $CO_2$ emission coefficient (kg-$CO_2$/kWh) is defined as an amount of $CO_2$ emission ÷ an amount of electric power sales, and the relationship of the amount of $CO_2$ emission (kg) = an amount of power consumption (kWh) × $CO_2$ emission coefficient (kg-$CO_2$/kWh) holds. The $CO_2$ emission coefficient (kg-$CO_2$/kWh) is assumed to be in a range of 0.3 to 0.7, although this value varies depending on an electric power company. In the present embodiment, "0.447" is used as an example for an electric power company. Here, the amount of power for printing per one-page image is assumed to be 3000 (mWh). In this case, the amount of $CO_2$

emission (g) associated with the amount of power for printing per one-page image is calculated as 3000 (mWh)÷1000 × 0.447 = 1.341 (g).

<<How to Obtain Amount of $CO_2$ Emission*2>>

First, the term "consumable parts" in this case means a concept that includes replacement parts that inevitably deteriorate over time, such as drum cartridges and toner cartridges in the case of electrophotographic image forming apparatuses. Then, the amount of $CO_2$ emission (g) of the consumable parts per one-page image is obtained in accordance with the number of output sheets × a consumable parts coefficient per sheet ÷ the number of one-page images. Here, the consumable parts coefficient per sheet is a value derived from the product life or the like, and takes a value such as 0.229, for example. In a case where the consumable parts coefficient per sheet is 0.229, 10 one-page images are printed by 2 in 1 printing, and the number of output sheets is 5, the amount of $CO_2$ emission (g) of the consumable parts per one-page image is calculated as 5 (sheets) × 0.229 ÷ 10 (one-page images) = 0.1145 (g).

<<How to Obtain Amount of $CO_2$ emission*3>>

The amount of $CO_2$ emission (g) of color materials per one-page image is obtained in accordance with the number of output sheets × a color materials coefficient per sheet × an image duty ratio (%) ÷ the number of one-page images. The color materials in the electrophotographic method are toners, and the toners coefficient per sheet is a value derived from the product life or the like based on a predetermined image chart, and takes a value such as 0.158, for example. The image duty ratio (%) is synonymous with the amount of the toners applied in the case of electrophotographic printing, and is calculated in accordance with an average print image duty ratio (%) ÷ a predetermined image chart duty ratio (%) × 100. The predetermined image chart duty ratio (%) is obtained by calculating the amount of the toners used (%) to print the predetermined image chart on a A4 sheet. Here, suppose that the toners coefficient per sheet is 0.158, the image duty ratio (amount of toners applied) is 80%, 10 one-page images are printed by 2 in 1 printing, and the number of output sheets is 5. In this case, the amount of $CO_2$ emission (g) of toners per one-page image is calculated as 5 (sheets) × 0.158 × 80% ÷ 10 (one-page images) = 0.0632 (g). The average print image duty ratio (%) is calculated based on a A4 sheet. In addition, in the case where the duty ratio based on a A3 sheet is 20%, the duty ratio based on a A4 sheet is calculated as 40%.

The amounts of $CO_2$ emissions *1 to *3 obtained as above are summed up to calculate the amount of $CO_2$ emission (g) associated with printing per one-page image. Specifically, the amount of $CO_2$ emission (g) associated with printing per one-page image is calculated as 1.341 (g) + 0.1145 (g) + 0.0632 (g) = 1.5187 (g).

<Operation Flow of Image Forming Apparatus>

<<Storage of Basic Data for Calculating Amount of $CO_2$ Emission>>

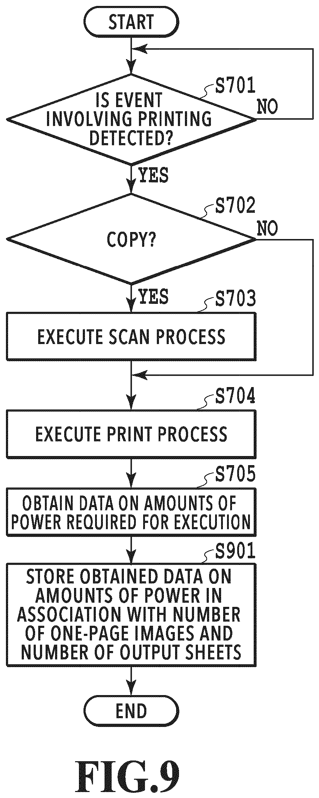

Next, with reference to a flowchart in Fig. 9, description is given of a series of processes for storing basic data for calculating the amount of $CO_2$ emission associated with printing per one-page image. The flowchart in Fig. 9 is different from the flowchart in Fig. 7 in Embodiment 1 in that S901 is added in place of S706. For this reason, a difference in S901 is mainly described. The series of processes presented in the flowchart in Fig. 9 is performed by the CPU 201 of the controller 103 executing a predetermined program. In the following description, sign "S" means a step.

In S901, the controller 103 stores the data on the amounts of power obtained in S705 in the HDD 106 while associating the data with the number of one-page images and the number of printed sheets (number of output sheets) according to the copy instruction or the like received in S701. After the storage, the present flow is ended.

The above is the flow of processes for storing the basic data for calculating the amount of $CO_2$ emission associated with printing per one-page image. The amount of $CO_2$ emission associated with printing per one-page image is calculated by using the basic data for a certain past period thus stored.

<<Calculation of Amount of $CO_2$ Emission Associated with Printing Per One-Page Image>>

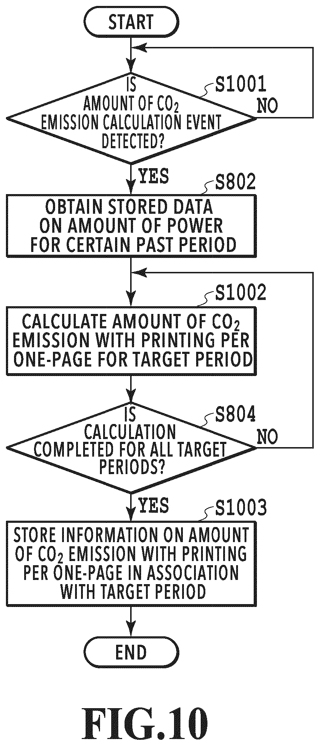

Next, with reference to a flowchart in Fig. 10, description is given of a series of processes for calculating the amount of $CO_2$ emission associated with printing per one-page image by using the basic data stored as described above. The series of processes presented in the flowchart in Fig. 10 is performed by the CPU 201 of the controller 103 executing a predetermined program. In the following description, sign "S" means a step.

S1001 is a process of monitoring whether or not an amount of $CO_2$ emission calculation event occurs. If such an event is detected, S802 is executed next. Here, the amount of $CO_2$ emission calculation event mentioned herein is, for example, a detection of a signal indicating that the image forming apparatus 101 will enter the sleep statue/off status as in the case of S801 in Embodiment 1.

In S802, the controller 103 reads and obtains from the HDD 106 the basic data for a certain past period that was stored according to the flow in Fig. 9 described above, that is, the data on the amounts of power associated with the numbers of one-page images and the numbers of output sheets. As is the case with Embodiment 1, for example, the basic data for the past one year is obtained on the premise that the graphs will be displayed for the past one week on the "daily" basis, the past three months on the "weekly" basis, and the past one year on the "monthly" basis.

In S1002, the controller 103 calculates the amount of $CO_2$ emission associated with printing per one-page image by using the basic data for a calculation target period extracted from the basic data obtained in S802. For example, as is the case with Embodiment 1, the target period is set to each of the past one week on the "daily" basis, the past three months on the "weekly" basis, and the past one year on the "monthly" basis, and the amount of $CO_2$ emission associated with printing per one-page image is calculated by using the basic data for each of the above target periods. The specific calculation method is as described in detail above.

In S804, the controller 103 determines whether or not the calculation of the amount of $CO_2$ emission associated with printing per one-page image is completed for all the target periods. If there is a target period yet to be processed, the controller 103 returns to S1002 and continues the process. On the other hand, if the calculation of the amount of $CO_2$ emission associated with printing per one-page image is completed for all of the past one week on the "daily" basis, the past three months on the "weekly" basis, and the past one year on the "monthly" basis set as the target periods, S1003 is executed next.

In S1003, the controller 103 stores, into the memory 203 or the HDD 106, the information on the amount of $CO_2$ emission associated with printing per one-page image calculated for each of the target periods in S804 while associating the information with the relevant target period. After the information is stored, the process specified in the event detected in S1001 is performed and the present flow is ended. For example, a sleep transition process is executed in the case where the event detected in S1001 is a transition to the sleep status, or a power-off process is executed in the case where the event is a shutdown instruction.

The above describes the details of the processes for calculating and storing the amount of $CO_2$ emission associated with printing per one-page image according to the present embodiment. After that, for example, in response to a depression of the "graph display" button (not illustrated) via the touch panel 400 or the like, a UI screen for a target period selected by the user is generated based on the stored information on the amount of $CO_2$ emission for each target period and is displayed as in Embodiment 1. Here, $CO_2$ is just an example of greenhouse gases as described above. The amounts of emissions of other gases, such as $N_2O$ (nitrous oxide), for example, can be calculated according to the same concept. The total amount of emission of greenhouse gases including $CO_2$ and $N_2O$ can be calculated in accordance with an activity level $\times$ an emission intensity (emission coefficient).

<Modification Example 1>

In the foregoing Embodiment 2, the print settings that cause differences in the amount of $CO_2$ emission associated with printing per one-page image are explained by using the color or monochrome printing and the combine or non-combine printing as the examples as in Embodiment 1. However, the present disclosure is not limited to these. For example, in a case where single-sided printing is changed to double-sided printing, the power consumption slightly increases because there is a need to drive a motor for turning a sheet over or the like. However, the change from the single-sided printing to the double-sided printing makes it possible to reduce the number of sheets used for the printing by about half, so that the "amount of $CO_2$ emission*2" and the "amount of $CO_2$ emission*3" in the above formula (2) decrease. In other words, the double-sided printing has a significant effect from the viewpoint of amount of $CO_2$ emission reduction and is a more environmentally friendly way of using the image forming apparatus. Therefore, in the case of Embodiment 2, it is possible to make users aware of an option of double-sided printing in the print settings in addition to the options of the monochrome printing and the combine printing.

<Modification Example 2>

In the foregoing Embodiments 1 and 2, the information on the amount of power for printing per one-page image/the amount of $CO_2$ emission associated with printing per one-page image calculated based on the jobs actually executed is presented. However, the present disclosure is not limited to these cases. For example, even in a case where the print settings of a job actually executed are color non-combine printing, the information on the amount of power for printing per one-page image under hypothetical print settings of the monochrome combine (2 in 1) printing may be estimated and the result may be additionally presented on the graph. In this case, the calculation result based on the print settings of the jobs actually executed and the estimation result based on the hypothetical print settings may be displayed with different types of lines or in different colors so that a user can distinguish between them. In this way, for example, how much the power consumption for executing a job can be reduced under the recommended print settings may be presented to the user.

[Other Embodiments]

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present disclosure has been described with reference to embodiments, it is to be understood that the present disclosure is not limited to the disclosed embodiments. The scope of the following claims is to be accorded the broadest interpretation so as to encompass all such modifications and equivalent structures and functions.

Various embodiments have been described in detail above but it will be understood that the present disclosure is not limited to these embodiments and encompasses all modifications, variants, alternatives and equivalents falling within the scope of the appended claims.

**Claims**

1. An image forming apparatus (101) comprising:

   a printing unit (104) configured to perform printing on a print medium based on image data; and
   a controller (103) for controlling the printing unit (104) based on a job involving the printing, wherein
   the controller (103)

   causes the printing unit (104) to print by applying printing settings to image data related to the job, and
   outputs information on an amount of power required to execute the job, the amount of power being an amount of power per processing unit on the condition that the print setting is applied.

2. The image forming apparatus according to claim 1, further comprising a reading unit (102) for performing a scan of a document, wherein
   the job is a copy job that needs execution of the scan or a print job that does not need execution of the scan.

3. The image forming apparatus according to claim 2, wherein

   the print setting is a setting of N-up printing, where N represents the number of pages to be printed on one side of a sheet, and
   the amount of power per processing unit on the condition that the print setting is applied is an amount of power per one-page image, where the one-page image is a unit in a page layout process in the N-up printing.

4. The image forming apparatus according to claim 3, wherein
   the controller (103)

   calculates the amount of power per processing unit on the condition that the print setting is applied regarding the jobs executed for a certain period in the past, by dividing a total amount of power of a first amount of power by the scan, a second amount of power by the printing, and a third amount of power by the controlling, by a total number of the one-page images printed in the jobs executed for the certain period, and
   outputs the information on the calculated amount of power per processing unit on the condition that the print setting is applied.

5. The image forming apparatus according to claim 4, wherein

the first amount of power is obtained by multiplying a copy count in the jobs executed for the certain period by a read power constant,
the second amount of power is a cumulative amount of power consumed by the printing unit for the jobs executed for the certain period,
the third amount of power is obtained by multiplying a total execution time for the jobs executed for the certain period by a controller power constant, and
the copy count indicates the number of scans executed in preparation for printing of scanned images.

6. The image forming apparatus according to claim 5, wherein the certain period includes at least one of a daily-based period, a weekly-based period, a monthly-based period, and an annual-based period.

7. The image forming apparatus according to any one of claims 4 to 6, wherein the controller (103)

calculates the amount of power per processing unit on the condition that the print setting is applied based on a detection of a specific event,
stores the information on the calculated amount of power in a storage apparatus, and
reads and outputs the stored information on the amount of power from the storage apparatus based on an instruction from a user.

8. The image forming apparatus according to claim 7, wherein the specific event is a signal indicating that the image forming apparatus will enter a sleep status or an off status.

9. The image forming apparatus according to claim 7, wherein the specific event is an instruction from the user via a user interface.

10. The image forming apparatus according to any one of claims 7 to 9, wherein

the user designates one of an hourly basis, a weekly basis, a monthly basis, and an annual basis in the instruction, and
the controller (103) reads and outputs the information on the amount of power per processing unit on the condition that the print setting is applied for a period on the designated basis from the storage apparatus.

11. The image forming apparatus according to claim 10, further comprising a display means (105) for displaying a UI screen, wherein
the controller (103) generates a graph in which a vertical axis represents the amount of power and a horizontal axis represents the period on the designated basis and causes the display means (105) to display the graph.

12. The image forming apparatus according to claim 10, further comprising a communication means (111) for performing communication with an external apparatus, wherein
the controller (103) generates a graph in which a vertical axis represents the amount of power and a horizontal axis represents the period on the designated basis and transmits data of the graph to the external apparatus.

13. The image forming apparatus according to any of claims 3 to 12, wherein the one-page image in a case where the job is a print job containing PDL data is an image of one page obtained by interpreting PDL of one page.

14. The image forming apparatus according to any of claims 3 to 12, wherein the one-page image in a case where the job is a copy job is one scanned image obtained by scanning one page of a document.

15. The image forming apparatus according to claim 4, further comprising a measuring means for measuring the first amount of power, the second amount of power, and the third amount of power, wherein
the controller (103) obtains the total amount of power based on values measured by the measuring means, and calculates the amount of power per processing unit on the condition that the print setting is applied by use of the obtained total amount of power.

**16.** An image forming apparatus (101) comprising:

a printing unit (104) for performing printing on a print medium based on image data;
a controller (103) for controlling the printing unit (104) based on a job involving the printing, wherein the controller (103)

causes the printing unit to print according to the job, by applying printing settings to image data related to the job; and
outputs information on an amount of greenhouse gas emission required to execute the job, the amount of greenhouse gas emission being an amount of greenhouse gas emission per processing unit on the condition that the print setting is applied.

**17.** The image forming apparatus according to claim 16, further comprising a reading unit (102) for performing a scan of a document, wherein
the job is a copy job that needs execution of the scan or a print job that does not need execution of the scan.

**18.** The image forming apparatus according to claim 17, wherein

the print setting is a setting of N-up printing, where N represents the number of pages to be printed on one side of a sheet, and
the amount of greenhouse gas emission per processing unit on the condition that the print setting is applied is an amount of greenhouse gas emission per one-page image, where the one-page image is a unit in a page layout process in the N-up printing.

**19.** The image forming apparatus according to claim 18, wherein
the controller (103) calculates at least one amount of greenhouse gas emission per processing unit on the condition that the print setting is applied, by adding up an amount of greenhouse gas emission associated with an amount of power for printing per processing unit on the condition that the print setting is applied, an amount of greenhouse gas emission of a consumable part per processing unit on the condition that the print setting is applied, and an amount of greenhouse gas emission of a color material per processing unit on the condition that the print setting is applied, and outputs the information on the calculated amount of greenhouse gas emission per processing unit on the condition that the print setting is applied.

**20.** The image forming apparatus according to any one of claims 16, 18, and 19, wherein the information on the amount of greenhouse gas emission contains information on an amount of $CO_2$ emission.

**21.** The image forming apparatus according to claim 19, wherein

the image forming apparatus is an electrophotographic image forming apparatus, and
the color material is toner.

**22.** A control method of an image forming apparatus including a printing unit for performing printing on a print medium based on image data, and a controller for controlling the printing unit based on a job involving the printing, wherein the controller

causes the printing unit to print, by applying printing settings to image data related to the job; and
outputs information on an amount of power required to execute the job, the amount of power being an amount of power per processing unit on the condition that the print setting is applied.

**23.** A control method of an image forming apparatus including a printing unit for performing printing based on image data on a print medium, and a controller for controlling the printing unit based on a job involving the printing, wherein the controller

causes the printing unit to print, by applying printing settings to image data related to the job; and
outputs information on an amount of greenhouse gas emission required to execute the job, the amount of greenhouse gas emission being an amount of greenhouse gas emission per processing unit on the condition that the print setting is applied.

24. The control method according to claim 23, wherein the information on the greenhouse gas emission contains information on an amount of $CO_2$ emission.

25. A program causing a computer to function as an image forming apparatus according to any one of claims 1 to 21.

26. A non-transitory computer readable storage medium storing a program according to claim 25.

100

⊗ TELEPHONE LINE

101

IMAGE FORMING APPARATUS

102

SCANNER MECHANISM

121

ADF UNIT

107

FAX MECHA-NISM

122

SCANNER UNIT

105

OPE-RATION UNIT

109

COMPUTER

LAN 108

USB 110

111

WIRELESS LAN

103

CONTROLLER

106

HDD

112

ACCESS POINT

104

PRINTER MECHANISM

141

MARKING UNIT

143

SHEET DELIVERY UNIT

142

SHEET FEEDER UNIT

# FIG.1

**FIG.2**

110

302

303

POWER SUPPLY
CONTROLLER UNIT

103

CONTROLLER
201

CPU

310

105

OPERATION
UNIT
305

CPU

311

POWER
SUPPLY

102

SCANNER
MECHANISM

312

104

PRINTER
MECHANISM
301

CPU

313

# FIG.3

FIG.4A

FIG.4B

FIG.5A

FIG.5B

AMOUNT OF POWER
PER ONE-PAGE IMAGE

COLOR COPY
(NORMAL)

| Image A | Image B | Image C | Image D |

NUMBER OF ONE-PAGE IMAGES:4
COPY COUNT:4
NUMBER OF OUTPUT SHEETS:4
2615[mWh/image]

COLOR COPY
(COMBINE)

| Image A / Image B | Image C / Image D |

NUMBER OF ONE-PAGE IMAGES:4
COPY COUNT:2
NUMBER OF OUTPUT SHEETS:2
1365[mWh/image]

MONOCHROME
COPY (NORMAL)

| Image A | Image B | Image C | Image D |

NUMBER OF ONE-PAGE IMAGES:4
COPY COUNT:4
NUMBER OF OUTPUT SHEETS:4
2337[mWh/image]

MONOCHROME
COPY (COMBINE)

| Image A / Image B | Image C / Image D |

NUMBER OF ONE-PAGE IMAGES:4
COPY COUNT:2
NUMBER OF OUTPUT SHEETS:2
1226[mWh/image]

# FIG.6

```
                    ┌─────────────┐
                    │    START    │
                    └──────┬──────┘
                           │
                           ▼                    S701
                    ╱─────────────╲
          ┌────────╱   IS EVENT    ╲   NO
          │        ╲ INVOLVING PRINTING ╲──────┐
          │         ╲  DETECTED?  ╱      │
          │          ╲───────────╱       │
          │                │YES          │
          │                ▼       S702   │
          │          ╱───────────╲  NO    │
          │         ╱    COPY?     ╲──────┤
          │         ╲             ╱        │
          │          ╲───────────╱         │
          │                │YES    S703     │
          │                ▼               │
          │     ┌────────────────────┐     │
          │     │ EXECUTE SCAN PROCESS│    │
          │     └──────────┬─────────┘     │
          │                │◄──────────────┘
          │                ▼       S704
          │     ┌────────────────────┐
          │     │ EXECUTE PRINT PROCESS│
          │     └──────────┬─────────┘
          │                ▼       S705
          │     ┌────────────────────────┐
          │     │ OBTAIN DATA ON AMOUNTS OF│
          │     │POWER REQUIRED FOR EXECUTION│
          │     └──────────┬─────────┘
          │                ▼       S706
          │     ┌────────────────────────┐
          │     │STORE OBTAINED DATA ON AMOUNTS│
          │     │ OF POWER IN ASSOCIATION WITH │
          │     │ NUMBER OF ONE-PAGE IMAGES    │
          │     └──────────┬─────────┘
          │                ▼
          │         ┌─────────────┐
          │         │     END     │
          │         └─────────────┘
          └──────────────────────────────────┐
```

# FIG.7

START

IS AMOUNT
OF POWER CALCULATION
EVENT DETECTED?
S801
NO

YES S802

OBTAIN STORED DATA
ON AMOUNT OF POWER
FOR CERTAIN PAST PERIOD

S803

CALCULATE AMOUNT OF POWER
FOR PRINTING PER ONE-PAGE
IMAGE FOR TARGET PERIOD

IS
CALCULATION
COMPLETED FOR ALL TARGET
PERIODS?
S804
NO

YES S805

STORE INFORMATION ON AMOUNT
OF POWER FOR PRINTING
PER ONE-PAGE IMAGE IN
ASSOCIATION WITH TARGET PERIOD

END

# FIG.8

START

IS EVENT INVOLVING PRINTING DETECTED? — S701 — NO

YES

COPY? — S702 — NO

YES — S703

EXECUTE SCAN PROCESS

EXECUTE PRINT PROCESS — S704

OBTAIN DATA ON AMOUNTS OF POWER REQUIRED FOR EXECUTION — S705

STORE OBTAINED DATA ON AMOUNTS OF POWER IN ASSOCIATION WITH NUMBER OF ONE-PAGE IMAGES AND NUMBER OF OUTPUT SHEETS — S901

END

# FIG.9

START

IS
AMOUNT OF $CO_2$
EMISSION CALCULATION EVENT
DETECTED? ⟋S1001 NO

↓ YES ⟋S802

OBTAIN STORED DATA
ON AMOUNT OF POWER
FOR CERTAIN PAST PERIOD

⟋S1002

CALCULATE AMOUNT OF $CO_2$
EMISSION WITH PRINTING PER
ONE-PAGE FOR TARGET PERIOD

IS
CALCULATION
COMPLETED FOR ALL TARGET
PERIODS? ⟋S804 NO

↓ YES ⟋S1003

STORE INFORMATION ON AMOUNT
OF $CO_2$ EMISSION WITH PRINTING
PER ONE-PAGE IN ASSOCIATION
WITH TARGET PERIOD

END

# FIG.10

Europäisches
Patentamt

European
Patent Office

Office européen
des brevets

# EUROPEAN SEARCH REPORT

**Application Number**

EP 25 19 1236

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2009 058749 A (RICOH KK) 19 March 2009 (2009-03-19) | 1-6, 13-26 | INV. G06F3/12 |
| Y | * 0012, 0020, 0025, 0026, 0032, 0037, 0040, 0041, 0055 * | 7-12 | |
| | ----- | | |
| Y | US 2012/053885 A1 (KATO KAZUNORI [JP]) 1 March 2012 (2012-03-01) | 7-12 | |
| A | * 0034, 0035, 0048, 0049, 0117, 0172, 0173, 0187; figures 17,18, 20 * | 1-6, 13-26 | |
| | ----- | | |

**TECHNICAL FIELDS SEARCHED (IPC)**

G06F

The present search report has been drawn up for all claims

| Place of search | Date of completion of the search | Examiner |
|---|---|---|
| Munich | 23 October 2025 | Halbhuber, David |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 19 1236

23-10-2025

| Patent document cited in search report | Publication date | Patent family member(s) | | Publication date |
|---|---|---|---|---|
| JP 2009058749 A | 19-03-2009 | NONE | | |
| US 2012053885 A1 | 01-03-2012 | JP | 5665427 B2 | 04-02-2015 |
| | | JP | 2012053544 A | 15-03-2012 |
| | | US | 2012053885 A1 | 01-03-2012 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013182131 A